(19) Europäisches Patentamt

European Patent Office

Office européen des brevets

(11) Veröffentlichungsnummer : **0 110 238**
**B1**

(12) **EUROPÄISCHE PATENTSCHRIFT**

(45) Veröffentlichungstag der Patentschrift :
**15.03.89**

(21) Anmeldenummer : **83111457.4**

(22) Anmeldetag : **16.11.83**

(51) Int. Cl.⁴ : **B 29 C 47/00**, B 29 C 47/04,
B 32 B 31/30, B 29 D 9/00

(54) Verfahren zur Herstellung einer mehrschichtigen Hohlkammerkunststofftafel.

(30) Priorität : **04.12.82 DE 3244953**

(43) Veröffentlichungstag der Anmeldung :
**13.06.84 Patentblatt 84/24**

(45) Bekanntmachung des Hinweises auf die Patenterteilung : **15.03.89 Patentblatt 89/11**

(84) Benannte Vertragsstaaten :
**AT CH DE FR GB IT LI NL SE**

(56) Entgegenhaltungen :
**EP–A– 0 065 619**
**EP–A– 0 109 388**
**DE–A– 1 694 273**
**DE–A– 2 832 676**
**US–A– 4 189 520**

(73) Patentinhaber : **Röhm GmbH**
**Kirschenallee Postfach 4242**
**D-6100 Darmstadt 1 (DE)**

(72) Erfinder : **Vetter, Heinz, Dr.**
**Taunusstrasse 92**
**D-6101 Rossdorf 1 (DE)**

EP 0 110 238 B1

**Beschreibung**

Die Erfindung betrifft ein Verfahren zur Herstellung einer mehrschichtigen Hohlkammerkunststofftafel gemäß dem Oberbegriff des Anspruchs 1, enthaltend eine tragende Kernschicht aus Polycarbonatkunststoff, die auf wenigstens einer Seite mit einer UV-Absorptionsschicht aus Kunststoff, welche einen flüchtigen UV-Absorber enthält, verbunden ist. Diese Schicht verhindert die Korrosion der Oberfläche der Kernschicht aus Polycarbonatkunststoff und die Vergilbung bei der Einwirkung von UV-Strahlung. Ohne eine solche UV-Absorptionsschicht würde die Oberfläche matt, rissig und spröde.

Gemäß DE-AS 1 694 273 wird auf Polycarbonattafeln eine Lackschicht aus beispielsweise 3 Teilen eines UV-Absorbers und 5 Teilen Polymethylmethacrylat erzeugt. Nach DE-OS 28 32 676 werden UV-Absorptionsschichten durch Koextrusion mit einer Kernschicht aus Polycarbonatkunststoff mittels einer Mehrstoffdüse erzeugt. Dort wird auch die Möglichkeit der gleichzeitigen Koextrusion dreier Schichten zu doppelt beschichteten Vollprofilen erwähnt, wobei die mittlere, zwischen der Kernschicht und der Deckschicht gelegene Zwischenschicht aus Polymethacrylatkunststoff als Haftvermittler wirkt und auch einen UV-Absorber enthalten kann.

Die in der Praxis gebräuchlichen UV-Absorber für Kunststoffe sind zum größten Teil bei Temperaturen im Bereich der Herstellungs- und Verarbeitungsbedingungen von Polycarbonattafeln flüchtig, d. h. sie treten aus der Absorptionsschicht aus und schlagen sich an dem Kalibrierwerkzeug nieder oder bilden eine dünne, aber störende Schicht auf der Oberfläche der Kunststofftafel. Dieser Effekt tritt vor allem bei hohen UV-Absorberkonzentrationen, insbesondere ab etwa 0,5 Gew.-% auf. Er wirkt sich besonders störend aus, wenn die UV-Absorberschicht durch Koextrusion mit der Kernschicht erzeugt wird, vor allem wenn die Kernschicht Hohlräume enthält und die extrudierte Kunststofftafel einen Vakuumformkanal durchläuft. Der aus der Absorptionsschicht ausgetretene UV-Absorber kann sich in den Vakuumbohrungen des Formkanals ansetzen und diese allmählich verstopfen.

Aufgabe und Lösung

Die Erfindung verfolgt das Ziel, die Störungen zu vermeiden, die durch den Austritt des UV-Absorbers aus der Mehrschichttafel bei ihrer Herstellung, Verarbeitung oder Anwendung bei hohen Temperaturen entstehen. Erfindungsgemäß wird dieses Ziel dadurch erreicht, daß bei der Herstellung der mehrschichtigen Hohlkammerkunststofftafel durch Koextrusion mehrerer haftend verbundener Schichten aus thermoplastisch extrudierbaren Kunststoffen zu einem mehrschichtigen Strang, bestehend aus einer Kernschicht aus Polycarbonatkunststoff mit einer Vielzahl von durchlaufenden Hohlkammern und einer UV-Absorptionsschicht auf wenigstens einer Seite der Kernschicht, bestehend aus einem Kunststoff, der einen flüchtigen UV-Absorber enthält, die Kernschicht in einem Mehrstoffextrusionswerkzeug wenigstens auf einer Seite mit einer UV-Absorptionsschicht, die wenigstens 2 Gew.-% eines flüchtigen UV-Absorbers enthält, verbunden wird und die UV-Absorptionsschicht auf der von der Kernschicht abgewandten Seite durch Koextrusion mit einer Deckschicht, die weniger als 2 Gew.-% an flüchtigen UV-Absorbern enthält, verbunden wird und der mehrschichtige Strang nach dem Verlassen der Extrusionsdüse in einem Vakuumformkanal weiterbehandelt wird. Es wurde gefunden, daß auch in diesem Fall eine gewisse Wanderung des UV-Absorbers in die Deckschicht eintreten kann, daß aber an deren Oberfläche keine Konzentrationen erreicht werden, die eine nennenswerte Verdampfung oder Auswanderung des UV-Absorbers bei hohen Temperaturen verursachen.

Ausführung der Erfindung

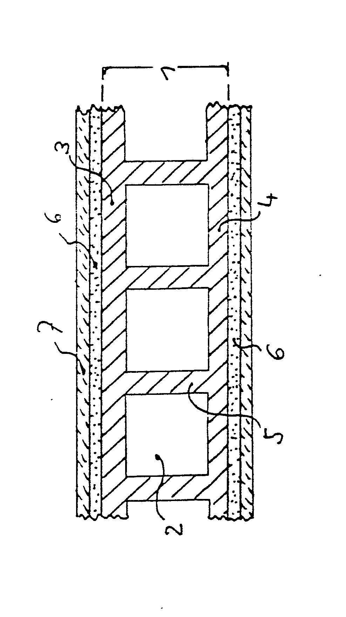

Die Technik der Herstellung von mehrschichtigen Hohlprofilkunststofftafeln gemäß dem Oberbegriff des Anspruchs 1 durch Koextrusion mehrerer, haftend verbundener Schichten aus thermoplastischen Kunststoffen mittels eines Mehrstoffextrusionswerkzeugs, das von mehreren Extrudern gespeist wird, ist bekannt ; vgl. EP-A 65619. Die beigefügte Figur zeigt eine extrudierte Hohlkammerplatte mit beidseitiger Beschichtung.

Die Kernschicht (1)
bildet die tragende Schicht der mehrschichtigen Hohlkammerkunststofftafel, auf der ihre wesentlichen Festigkeitseigenschaften beruhen, während die UV-Absorptions- und Deckschichten in dieser Hinsicht von untergeordneter Bedeutung sind. In der Regel sind die Außenseiten der Kernschicht parallel zueinander und eben, jedoch können sie auch gewellt oder — namentlich im eingebauten Zustand — einachsig gebogen sein.

Die Kernschicht (1) enthält eine Vielzahl von durchlaufenden Hohlkammern (2), die sich vorzugsweise parallel zueinander geradlinig durch die Kernschicht erstrecken. Vorzugsweise handelt es sich um Stegdoppel- oder Dreifachplatten, in denen die Kernschicht (1) aus zwei ebenen, parallelen Wänden (3, 4) besteht, die durch Stege (5) einstückig miteinander verbunden sind. Die Hohlkammern (2) können gegebenenfalls durch eine oder mehrere weitere Zwischenwände unterteilt sein. Die Wände (3, 4) und Stege (5) haben gewöhnlich Wandstärken von 0,3 bis 2 mm. Die Kernschicht einschließlich der Hohlkammern ist beispielsweise 3 bis 60, vorzugsweise 4 bis 16 mm dick.

Die Flächenausdehnung und -gestalt der Kernschicht richtet sich nach den Anforderungen der vorgesehenen Verwendung und ist im Rahmen der technischen Herstellungsbedingungen weitgehend beliebig. Flach liegende Tafeln haben zweckmäßig eine rechteckige Fläche und Kantenlängen von 0,5 bis 6 m.

Die UV-Absorptionsschicht (6)

Die Kernschicht (1) trägt auf einer oder auf beiden Seiten eine fest daran haftende UV-Absorptionsschicht (6), die sich von der Kernschicht durch einen höheren Gehalt an UV-Absorbern unterscheidet. Ihre Dicke soll ausreichen, um eine senkrecht einfallende UV-Strahlung von 280 bis 380 nm zu mehr als 90 % bevorzugt mehr als 99 % (bezogen auf den nicht reflektierten Anteil) zu absorbieren. Dafür reicht eine Dicke von 5 bis 50 μm aus, jedoch können Schichtdicken bis 100 μm aufgebracht werden.

Die UV-Absorptionsschicht enthält in der Regel wenigstens 0,4 g/m² eines üblichen UV-Absorbers für Kunststoffe. Der bevorzugte Gehalt an UV-Absorbern liegt zwischen 2 und 15 Gew.-%, kann aber gegebenenfalls bis 30 Gew.-% gesteigert werden. Die Konzentration wird um so höher gewählt, je dünner die Schicht ist, damit die erforderliche Absorption innerhalb der Absorptionsschicht eintritt. Unterhalb einer UV-Absorbermenge von 0,4 g/m² ist der Schutz der Oberfläche der Kernschicht wegen Verwitterung oft nicht mehr gewährleistet. Der Schutz ist um so wirksamer, je höher die Konzentration liegt. Die Mehrzahl der gebräuchlichen UV-Absorber ist flüchtig in dem Sinne, daß bei einem Gehalt von 0,5 Gew.-% bei 260 °C bei Normaldruck und verstärkt im Vakuum eine feststellbare Sublimation eintritt, die mit der Abscheidung des verdampften UV-Absorbers an kälteren Anlageteilen einhergeht. Geeignete UV-Absorber sind 2-Hydroxy-4-n-octoxy-benzophenon, 2-Hydroxy-4-methoxybenzophenon, 2-(2'-Hydroxy-5'-methylphenyl)-benztriazol und andere Abkömmlinge des 2-Hydroxy-benzophenons oder Benzotriazols, ferner 2,4-Dihydroxy-benzoylfuran, Salicylsäurephenylester, Resorcindisalicylat, Resorcinmono- und di-benzoat, Benzylbenzoat, Stilben, β-Methylumbelliferon und dessen Benzoat. Zahlreiche weitere UV-Absorber sind bekannt und im Handel erhältlich. Der UV-Absorber soll in der gewählten Konzentration mit dem Kunststoffmaterial möglichst homogen mischbar sein.

Die Deckschicht (7)
liegt an der Außenseite der UV-Absorptionsschicht (6) und braucht nur so dick zu sein, um das Verdampfen bzw. Ausschwitzen des UV-Absorbers zu verhindern oder auf ein nicht mehr störendes Ausmaß zu begrenzen. Dafür reicht in der Regel eine Dicke von 5 bis 100 μm, im allgemeinen 5 bis 50 μm.

Die Werkstoffe

Die Kernschicht besteht aus einem Polycarbonatkunststoff. Die UV-Absorptionsschicht kann aus dem gleichen oder einem ähnlichen Polycarbonatkunststoff bestehen, unterscheidet sich jedoch von dem Werkstoff der Kernschicht durch den höheren Gehalt eines UV-Absorbers. In der Regel ist die Kernschicht frei von UV-Absorbern, kann jedoch gegebenenfalls geringe Mengen, etwa bis 2 Gew.-% davon enthalten.

Der Polycarbonatkunststoff leitet sich in der Regel von einem aromatischen Bisphenol oder einem Gemisch solcher Bisphenole ab, insbesondere Bisphenol A. Alle Polycarbonatkunststoffe, die sich zu Tafeln von hoher Zähigkeit und Lichtdurchlässigkeit extrudieren lassen, sind als Werkstoff sowohl für die Kernschicht als auch für die UV-Absorptionsschicht geeignet. Sie können glasklar und farblos oder in üblicher Weise gefärbt, getrübt oder pigmentiert sein, jedoch hat die Erfindung für hoch lichtdurchlässige Massen die größte Bedeutung.

Die Deckschicht enthält in der Regel keinen oder allenfalls weniger als 2 Gew.-% UV-Absorber, jedenfalls wesentlich weniger als die UV-Absorberschicht. Vorzugsweise liegt der Gehalt unter 1 Gew.-%. Die Deckschicht besteht daher aus einem Werkstoff, der auch ohne höheren UV-Absorbergehalt hinreichend beständig gegen die Korrosion durch UV-Strahlung ist.

Gut geeignet sind Polymethylmethacrylat oder Kunststoffe, die zu wenigstens 40 Gew.-% aus Methylmethacrylat aufgebaut sind. Hierbei kann es sich um Mischpolymerisate dieses Monomeren oder auch um Polymerisatgemische handeln, wobei am Aufbau der Mischungskomponenten soviel Methylmethacrylat beteiligt ist, daß der Gesamtanteil dieser Monomereinheiten wenigstens bei 40 % und vorzugsweise bei mindestens 50 Gew.-%, bezogen auf das Gesamtgewicht der Deckschicht liegt. Geeignete Mischpolymerisate enthalten beispielsweise 75 bis 90 Gew.-% Methylmethacrylat und zum übrigen Teil Acrylester mit 1 bis 8 oder Methacrylester mit 2 bis 8 C-Atomen im Alkoholrest. $C_2$- bis $C_4$-Alkylreste sind bevorzugt.

Der Werkstoff der UV-Absorptionsschicht kann — abgesehen von dem UV-Absorber-Gehalt — mit dem Polycarbonatkunststoff der Kernschicht oder mit dem Werkstoff der Deckschicht übereinstimmen. Kunststoffe mit einer Bruchdehnung von mindestens 3,5 % sind bevorzugt. Gemäß einer bevorzugten Ausführungsform der Erfindung besteht die UV-Absorptionsschicht aus einem Polycarbonatkunststoff, insbesondere aus dem gleichen Kunststoff wie die Kernschicht.

Die Herstellung der mehrschichtigen Tafeln erfolgt durch Koextrusion aller Schichten. Daher müssen die Kunststoffe aller Schichten unter etwa gleichen Bedingungen extrudierbar sein. Man verwendet eine Mehrschichtdüse, an die wenigstens drei Extruder zur Erzeugung der Kernschicht, der UV-Absorptionsschichten und der Deckschichten angeschlossen sind. Die Mehrschichtdüse ist in an sich bekannter Weise so aufgebaut, daß auf die Kernschicht ein- oder vorzugsweise beidseitig dünne, gleichmäßige Schichten des UV-absorbierenden Materials und des Deckschichtmaterials haftend aufgebracht werden. Der mehrschichtige Strang wird nach dem Verlassen der Düse in einem Vakuumformkanal in bekannter Weise weiterbehandelt. Der Vakuumformkanal besteht aus einem an beiden Enden offenen, geradlinigen kühlbaren Tunnel mit einem über die ganze Länge im wesentlichen gleichbleibenden freien Querschnitt, der dem Profil der herzustellenden Hohlkammerplatte entspricht. Ein nicht gleichförmiger Querschnitt kann gegebenenfalls dazu dienen, den durchlaufenden Strang aufzuweiten oder seiner Abkühlungsschrumpfung zu folgen. Durch Bohrungen oder Schlitze in den Wänden des Formkanals wirkt ein Unterdruck auf den durchlaufenden Strang ein und hält ihn, solange er sich noch im plastischen oder elastischen Zustand befindet, in Berührung mit den Formkanalwänden. Die Bohrungen oder Schlitze sind so eng, daß die Formmasse nicht eindringen kann. Die Abmessungen können z. B. von etwa einem Millimeter oder noch weniger im Eintrittsbereich bis zu mehreren Millimetern im Austrittsbereich reichen. Die Bohrungen oder Schlitze sind mit einer Unterdruckleitung verbunden, die auf einen Druck, der um beispielsweise 5 bis 5 000 Pa (5 mm bis 5 m Wassersäule) niedriger als der umgebende Luftdruck liegen kann, eingestellt ist. Der Strang wird in einem oder mehreren hintereinander geschalteten Formkanälen unter die Erweichungstemperatur abgekühlt. Eine für die Erfindung anwendbare Vorrichtung und Arbeitsweise zur Koextrusion ist z. B. in Michaeli, Extrusionswerkzeuge für Kunststoffe, Hanser-Verlag, 1979, (Seiten 301-326) in den Grundzügen beschrieben.

Die Deckschicht verhindert das Ausdampfen des UV-Absorbers. Ein Teil des UV-Absorbers kann aus der UV-Absorptionsschicht in den angrenzenden Bereich der Deckschicht eindiffundieren, wird aber in der Regel nicht bis zur Oberfläche der Deckschicht vordringen. Die Diffusion in die Deckschicht ist vorteilhaft, wenn die UV-Absorptionsschicht aus Polycarbonatkunststoff besteht, weil dadurch die UV-Absorption schon vor dem Eintritt der Strahlung in die Eigentliche Absorptionsschicht beginnt und die äußerste Oberfläche dieser Schicht nicht der unabgeschwächten UV-Strahlung ausgesetzt wird.

Anwendung

Die erfindungsgemäßen Tafeln dienen als Verglasungs- und Bauelemente, vor allem im Freien, wo die dem Sonnenlicht ausgesetzte Seite die Deckschicht trägt. In Form von Stegdoppelplatten eignen sie sich zur Errichtung von Gewächshäusern, wobei sie vorzugsweise in Längsrichtung zu einem Tonnengewölbe gebogen werden.

**Patentansprüche**

1. Verfahren zur Herstellung einer mehrschichtigen Hohlkammerkunststofftafel durch Koextrusion mehrerer haftend verbundener Schichten aus thermoplastisch extrudierbaren Kunststoffen zu einem mehrschichtigen Strang, bestehend aus einer Kernschicht (1) aus Polycarbonatkunststoff mit einer Vielzahl von durchlaufenden Hohlkammern (2) und einer UV-Absorptionsschicht (6, 7) auf wenigstens einer Seite der Kernschicht, bestehend aus einem Kunststoff, der einen flüchtigen UV-Absorber enthält, dadurch gekennzeichnet, daß die Kernschicht (1) in einem Mehrstoffextrusionswerkzeug wenigstens auf einer Seite mit einer UV-Absorptionsschicht (6), die wenigstens 2 Gew.-% eines flüchtigen UV-Absorbers enthält, verbunden wird und die UV-Absorptionsschicht (6) auf der von der Kernschicht abgewandten Seite durch Koextrusion mit einer Deckschicht (7), die weniger als 2 Gew.-% an flüchtigen UV-Absorbern enthält, verbunden wird und der mehrschichtige Strang nach dem Verlassen der Extrusionsdüse in einem Vakuumformkanal weiterbehandelt wird.

2. Verfahren nach Anspruch 1, dadurch gekennzeichnet, daß die Deckschicht aus einem Kunststoff erzeugt wird, der zu wenigstens 40 Gew.-% aus Methylmethacrylat aufgebaut ist.

3. Verfahren nach den Ansprüchen 1 oder 2, dadurch gekennzeichnet daß die UV-Absorptionsschicht in einer Dicke von 5 bis 50 μm erzeugt wird.

4. Verfahren nach den Ansprüchen 1 bis 3, dadurch gekennzeichnet, daß die Deckschicht in einer Dicke von 5 bis 50 μm erzeugt wird.

**Claims**

1. Process for preparing a multi-layer hollow chamber plastics panel by coextrusion of a plurality of adhesively connected layers of thermoplastically extrudable plastics to form a multi-layer strip, consisting of a core layer (1) of polycarbonate plastics with a plurality of hollow chambers (2) extending therethrough and a UV absorbing layer (6, 7) on at least one side of the core layer, consisting of a plastics material which contains a volatile UV absorber, characterised in that the core layer (1) is connected, in a multi-substance extrusion tool, at least on one side, to a UV absorbing layer (6) which contains at least 2 % by weight of a volatile UV absorber and the UV absorbing layer (6) is connected, on the side remote from the core layer, by coextrusion, to a covering layer (7) which contains less than 2 % by weight of volatile UV absorbers, and after leaving the extrusion die the multi-layer strip is further treated in a vacuum forming channel.

2. Process as claimed in claim 1, characterised in that the covering layer is produced from a plastics material composed of at least 40 % by weight of methylmethacrylate.

3. Process as claimed in claim 1 or 2, characterised in that the UV absorbing layer is produced in a thickness of from 5 to 50 μm.

4. Process as claimed in claims 1 to 3, characterised in that the covering layer is produced in a thickness of from 5 to 50 μm.

## Revendications

1. Procédé pour la fabrication d'un panneau de matière plastique alvéolé à plusieurs couches par co-extrusion de plusieurs couches unies par adhérence en matières plastiques extrudables à l'état thermoplastique, pour former un produit extrudé à plusieurs couches se composant d'une couche d'âme (1) en matière plastique de polycarbonate qui présente plusieurs cavités continues (2), et d'une couche d'absorption des rayons UV (6, 7) d'un côté au moins de la couche d'âme, faite, d'une matière plastique qui contient un absorbant des rayons UV volatil, caractérisé en ce que la couche d'âme (1) est fixée, dans un outil d'extrusion mixte, au moins sur l'une de ses faces, à une couche d'absorption des rayons UV (6) qui contient au moins 2 % en poids d'un absorbant des rayons UV volatil, la couche d'absorption des rayons UV (6) est fixée par co-extrusion, sur sa face située à l'opposé de la couche d'âme, à une couche de recouvrement (7) qui contient moins de 2 % en poids d'absorbant des rayons UV volatil, et le produit extrudé à plusieurs couches est soumis à un traitement ultérieur dans un canal de moulage par le vide après avoir quitté la filière d'extrusion.

2. Procédé selon la revendication 1, caractérisé en ce que la couche de recouvrement est produite à partir d'une matière plastique qui est composée de méthacrylate de méthyle pour au moins 40 % en poids.

3. Procédé selon la revendication 1 ou 2, caractérisé en ce que la couche d'absorption des rayons UV est produite avec une épaisseur de 5 à 50 $\mu$m.

4. Procédé selon l'une quelconque des revendications 1 à 3, caractérisé en ce que la couche de recouvrement est produite avec une épaisseur de 5 à 50 $\mu$m.